# EUROPÄISCHE PATENTSCHRIFT

(11) **EP 4 480 289 B1**
(45) Veröffentlichungstag und Bekanntmachung des Hinweises auf die Patenterteilung: **15.04.2026**
(21) Anmeldenummer: 24182721.1
(22) Anmeldetag: 18.06.2024
(51) Int. Cl.: A01B 27/00, A01B 39/12, A01B 39/18, A01B 51/00, A01B 79/00, G06V 10/00, G06V 10/40, G06V 10/764

(54) **VERFAHREN ZUR STEUERUNG EINER BODENBEARBEITUNGSVORRICHTUNG**
METHOD FOR CONTROLLING A SOIL TILLAGE IMPLEMENT
PROCÉDÉ DE COMMANDE D'UN DISPOSITIF DE TRAVAIL DU SOL

(30) Priorität: 22.06.2023 DE 102023116464
(43) Veröffentlichungstag der Anmeldung: 25.12.2024
(73) Patentinhaber: Lemken GmbH & Co KG, 46519 Alpen (DE)
(72) Erfinder: Morssink-Vader, Chris, 2391 CD Hazerswoude-Dorp (NL)

(56) Entgegenhaltungen:
- DE-A1- 102021 133 723
- GB-A- 2 598 012
- US-B2- 10 455 826
- DEVIA CARLOS A ET AL: "High-Throughput Biomass Estimation in Rice Crops Using UAV Multispectral Imagery", JOURNAL OF INTELLIGENT, SPRINGER NETHERLANDS, DORDRECHT, vol. 96, no. 3-4, 4 March 2019 (2019-03-04), pages 573 - 589, XP036950978, ISSN: 0921-0296, [retrieved on 20190304], DOI: 10.1007/S10846-019-01001-5
- PASQUALE TRIPODI ET AL: "Sensing Technologies for Precision Phenotyping in Vegetable Crops: Current Status and Future Challenges", AGRONOMY, vol. 8, no. 4, 22 April 2018 (2018-04-22), pages 57, XP055662307, DOI: 10.3390/agronomy8040057

## Beschreibung

Die vorliegende Erfindung betrifft ein Verfahren zur Steuerung einer Bodenbearbeitungsvorrichtung gemäß dem Oberbegriff des Anspruches 1. Weiterhin betrifft die Erfindung eine Bodenbearbeitungsvorrichtung gemäß dem Oberbegriff des Anspruches 11.

Zum mechanischen Entfernen und/oder Zerkleinern von Bewuchs zwischen in benachbarten Reihen angepflanzten Kulturpflanzen kommt eine Bodenbearbeitungsvorrichtung zum Einsatz. Die Bodenbearbeitungsvorrichtung umfasst zum Entfernen und/oder Zerkleinern von Bewuchs in Querrichtung zu den Reihen in einem Reihenabstand an einem Traggestell angeordnete Bearbeitungswerkzeuge, welche auf zwischen den Kulturpflanzenreihen vorhanden Bewuchs einwirken.

Zur Erkennung von Bewuchs und Kulturpflanze sowie der Differenzierung zwischen Kulturpflanze und Bewuchs weist die Bodenbearbeitungsvorrichtung zumindest eine Detektionseinrichtung auf. Mittels der zumindest einen optischen Detektionseinrichtung werden Bilddaten vom Boden, den Kulturpflanzen und/oder des Bewuchses innerhalb der Reihe erfasst. Die von der zumindest einen optischen Detektionseinrichtung generierten Bilddaten werden durch eine der Bodenbearbeitungsvorrichtung zugeordnete Steuerungsvorrichtung ausgewertet. Durch die Steuerungsvorrichtung werden die Bewegungsabläufe der Bearbeitungswerkzeuge zur Entfernung des Bewuchses angesteuert.

Derzeit erfolgt die Erkennung von Kulturpflanzenreihen mit klassischen RGB-Kameras (Rot-Grün-Blau) oder Stereovision-Kameras oder 3D-Kameras. Um Pflanzen vom Boden zu unterscheiden, werden die generierten Bilddaten ausgewertet. Die Differenzierung zwischen Boden und Kulturpflanzen wird bei einigen Kulturpflanzenarten, welche einen bläulichen Farbton aufweisen oder eine dicke Wachsschicht, durch welche der detektierbare Grünanteil signifikant reduziert ist, erschwert. Stereovision-Kameras oder 3D-Kameras sind hinsichtlich der Unterscheidung von Boden, Bewuchs und Kulturpflanze bei kleinen Kulturpflanzen respektive geringer Wuchshöhe eingeschränkt. Verschiedene Bodenbearbeitungsvorrichtungen mit Detektionseinrichtung bzw. Verfahren zu deren Steuerung werden beispielsweise in den DE102021133723A1, US10455826B2 oder GB2598012A offenbart.

Hiervon ausgehend liegt der Erfindung die Aufgabe zugrunde, ein Verfahren zur Steuerung einer Bodenbearbeitungsvorrichtung sowie eine Bodenbearbeitungsvorrichtung weiterzubilden, dass eine verbesserte Unterscheidung zwischen Boden und Kulturpflanze erreicht wird, um die Genauigkeit der Ansteuerung der Bearbeitungswerkzeuge zu erhöhen.

Diese Aufgabe wird durch ein Verfahren zur Steuerung einer Bodenbearbeitungsvorrichtung mit den Merkmalen des unabhängigen Patentanspruchs 1 gelöst. Weiterhin wird die Aufgabe durch eine Bodenbearbeitungsvorrichtung mit den Merkmalen des unabhängigen Patentanspruchs 11 gelöst. Vorteilhafte Ausführungsformen und Weiterbildungen sind den jeweils hiervon abhängigen Ansprüchen zu entnehmen.

Gemäß dem Anspruch 1 wird ein Verfahren zur Steuerung einer Bodenbearbeitungsvorrichtung zum Entfernen und/oder Zerkleinern von Bewuchs zwischen in Reihen angepflanzten Kulturpflanzen mittels in Querrichtung zu den Reihen in einem Reihenabstand an einem Traggestell angeordneten Bearbeitungswerkzeuge vorgeschlagen, wobei Bilddaten vom Boden, den Kulturpflanzen und/oder des Bewuchses mittels zumindest einer optischen Detektionseinrichtung erfasst und die Bilddaten durch eine der Bodenbearbeitungsvorrichtung zugeordneten Steuerungsvorrichtung ausgewertet werden. Durch die Steuerungsvorrichtung wird die Position der Bearbeitungswerkzeuge zur Entfernung des Bewuchses relativ zu zumindest einer der Reihen in Abhängigkeit von der Auswertung angesteuert. Erfindungsgemäß ist vorgesehen, dass als zumindest eine Detektionseinrichtung eine Kamera verwendet wird, durch welche Bilddaten im Rot-Grün-Nahinfrarot-Spektrum (RG-NIR-Spektrum) unter Ausschluss des Blau-Spektrums erfasst werden.

Der Erfindung liegt die Überlegung zugrunde, zur Erkennung von Kulturpflanzen, die sich durch einen durch bläulichen Farbton auszeichnen oder eine dicke Wachsschicht aufweisen, die nur für einen geringen Grünanteil durchlässig ist, anstelle des Blau-Spektrums das NIR-Spektrum auszuwerten, um zum einen zwischen Boden, Bewuchs und Kulturpflanzen zu unterscheiden und zum anderen auch deren Lage, Form und Wuchs zu bestimmen. Dabei steht insbesondere die Unterscheidung von Boden und Kulturpflanzen im Vordergrund. Diese Bestimmung wird der Ansteuerung der Bearbeitungswerkzeuge zugrunde gelegt, um die Genauigkeit der Bearbeitung bei der mechanischen Entfernung und/oder Zerkleinerung von Bewuchs zwischen den in Reihen angepflanzten Kulturpflanzen zu erhöhen. Dabei wird die Erkenntnis genutzt, dass der Reflexionsanteil von Licht im NIR-Spektrum bei Pflanzen, die Photosynthese betreiben, um ein Vielfaches höher ist als der von den Pflanzen Anteil an reflektiertem Licht im sichtbaren Grün-Spektrum. Dadurch ist eine signifikant verbesserte Unterscheidung zwischen Kulturpflanze und Boden gegeben sowie eine Verbesserung bei der Differenzierung von Kulturpflanze und Bewuchs.

Insbesondere kann einem Bildsensor der Kamera ein Dreifach-Bandpassfilter vorgeschaltet werden, durch welchen Wellenlängen im Blau-Spektrum herausgefiltert werden. Hierdurch kann weiterhin eine RGB-Kamera als optische Detektionseinrichtung verwendet werden, welche kostengünstiger als eine Stereovision-Kamera oder 3D-Kamera ist. Da das Funktionsprinzip bei der Verwendung einer Stereovision-Kamera oder 3D-Kamera anders ist, kann mittels der RGB-Kamera mit vorgeschaltetem Dreifach-Bandpassfilter auch ein völlig anderes Erkennungsergebnis erzielt werden. Der Kostenvorteil verstärkt sich insbesondere dann, wenn die Bodenbearbeitungsvorrichtung zur parallelen Bearbeitung mehrerer Reihen mit Kulturpflanzen eingerichtet ist. Entsprechend kann die Bodenbearbeitungsvorrichtung mehrere optische Detektionseinrichtungen umfassen, um mehrere zu bearbeitende Reihen zu erfassen.

Bevorzugt kann zur Unterscheidung zwischen Boden und den Kulturpflanzen und/oder dem Bewuchs ein hyperspektraler Vegetationsindex, insbesondere der Triangular Vegetationsindex (TVI), verwendet werden. Mittels des Vegetationsindex kann der Chlorophyllgehalt von Kulturpflanzen und Bewuchs ermittelt werden, um diese vom Boden zu unterscheiden. Der Triangular Vegetationsindex (TVI) wird als Fläche eines hypothetischen Dreiecks im Spektralraum berechnet, das den grünen Spitzenreflexionsgrad, das Minimum der Chlorophyllabsorption und die NIR-Schulter miteinander verbindet. Wenn die Chlorophyllabsorption eine Abnahme des roten Reflexionsgrads und die Fülle des Blattgewebes eine Zunahme des NIR-Reflexionsgrads bewirkt, vergrößert sich die Gesamtfläche des Dreiecks.

Gemäß einer Weiterbildung kann mittels eines Schwellenwertverfahrens eine Binarisierung der erfassten Bilddaten durchgeführt werden. Mittels der Binarisierung wird aus einem in einem Zwischenschritt zum Graustufenbild umgewandelten Farbbild ein Binärbild erzeugt. Das Binärbild wird verwendet, um durch Auswertung zwischen Bewuchs und Kulturpflanze zu unterscheiden. Hierzu kann ein Bediener eine Größenvorgabe für die Kulturpflanze mittels einer Eingabe-Ausgabe-Einheit vornehmen, welche als Vergleichsmaßstab für die Differenzierung zwischen Bewuchs und Kulturpflanze verwendet wird.

In einer Speichereinheit der Steuerungsvorrichtung kann ein geeigneter Algorithmus zur Binarisierung hinterlegt oder hinterlegbar sein. Eine einfache Binarisierungsmethode ist dabei das Schwellenwertverfahren. Beispielhaft für ein Schwellenwertverfahren wird das Verfahren von Otsu genannt.

Insbesondere können vom Schwellenwertverfahren verwendete Schwellenwerte durch die Steuerungsvorrichtung automatisch vorgegeben und/oder manuell durch einen Bediener der Bodenbearbeitungsvorrichtung eingestellt und/oder angepasst werden. Während eine automatische Vorgabe von Schwellenwerten für das Schwellenwertverfahren eine Vereinfachung bzw. Entlastung des Bedieners darstellt, bietet die manuelle Vorgabe oder Anpassung durch den Bediener die Möglichkeit, die verwendeten Schwellenwerte des Schwellenwertverfahrens an bestehende Umgebungsbedingungen während des Bearbeitungsvorganges auf dem Feld anzupassen bzw. diese zu berücksichtigen.

Bevorzugt kann in Abhängigkeit von der Auswertung der Bilddaten die laterale Position des mehrere Bearbeitungswerkzeuge tragenden, quer zu den Reihen der angepflanzten Kulturpflanzen orientierten Traggestells durch die Steuerungsvorrichtung angepasst werden. Hierdurch lässt sich eine präzisere Führung der Bodenbearbeitungsvorrichtung entlang der Reihen erreichen.

Gemäß einer Weiterbildung kann in Abhängigkeit von der Auswertung der Bilddaten die laterale Position von einer Reihe mit Kulturpflanzen zugeordneten Bearbeitungswerkzeugen angepasst werden. Die Anpassung der lateralen Position von einer Reihe mit Kulturpflanzen zugeordneten Bearbeitungswerkzeugen hat den Vorteil, dass den einzelnen Reihen individuell gefolgt werden kann. Unterschiedliche seitliche Abstände benachbarter Reihen können somit individuell durch die laterale Anpassung der die jeweilige Reihe bearbeitenden Bearbeitungswerkzeuge ausgeglichen werden. Darüber hinaus lässt sich ein einzuhaltender Sicherheitsabstand zu den Kulturpflanzen minimieren, so dass auch ein einer Kulturpflanze nahestehender Bewuchs entfernbar ist.

Dabei kann die laterale Anpassung von Bearbeitungswerkzeugen voneinander unabhängig durchgeführt werden.

Neben einer gemeinsamen lateralen Anpassung der Position aller Bearbeitungswerkzeuge durch die seitliche Verschiebung des Traggestells kann somit auch eine reihenabhängige Verschiebung einzelner Bearbeitungswerkzeuge durch eine entsprechende Ansteuerung durch die Steuerungsvorrichtung durchgeführt werden.

Bevorzugt können in Abhängigkeit von der Auswertung der Bilddaten die Bewegungsabläufe eines Bearbeitungswerkzeugs eines Paares von Bearbeitungswerkzeugen unabhängig von dem anderen Bearbeitungswerkzeugs verändert werden. Hierunter ist eine Anpassung einer oszillierenden Bewegung von Bearbeitungswerkzeugen unabhängig voneinander zu verstehen. Die oszillierende Bewegung des jeweiligen Bearbeitungswerkzeuges kann als eine Pendelbewegung um eine im Wesentlichen horizontale Achse erfolgen. Die oszillierende Bewegung des jeweiligen Bearbeitungswerkzeuges kann alternativ auch als eine Schwenkbewegung um eine im Wesentlichen vertikale Achse erfolgen. Eine Kombination von Pendelbewegung und Schwenkbewegung ist, in Abhängigkeit von der Ausgestaltung der Bearbeitungswerkzeuge, ebenfalls denkbar.

Die eingangs gestellte Aufgabe wird weiterhin durch eine reihenabhängige Bodenbearbeitungsvorrichtung gemäß Anspruch 11 gelöst.

Gemäß dem Anspruch 11 wird eine Bodenbearbeitungsvorrichtung zum Entfernen und/oder Zerkleinern von Bewuchs zwischen in Reihen angepflanzten Kulturpflanzen vorgeschlagen. Die Bodenbearbeitungsvorrichtung umfasst in Querrichtung zu den Reihen in einem Reihenabstand an einem Traggestell angeordnete Bearbeitungswerkzeuge sowie eine der Bodenbearbeitungsvorrichtung zugeordnete Steuerungsvorrichtung, die dazu ausgeführt und eingerichtet ist, von zumindest einer an der Bodenbearbeitungsvorrichtung angeordneten optischen Detektionseinrichtung erfasste Bilddaten vom Boden, den Kulturpflanzen und/oder des Bewuchses auszuwerten und in Abhängigkeit von der Auswertung der Bilddaten die Position der Bearbeitungswerkzeuge zur Entfernung des Bewuchses relativ zu zumindest einer der Reihen anzusteuern. Erfindungsgemäß ist vorgesehen, dass die zumindest eine optische Detektionseinrichtung als eine Kamera ausgebildet ist, welche zur Erfassung von Bilddaten im Rot-Grün-Nahinfrarot-Spektrum (RG-NIR-Spektrum) unter Ausschluss des Blau-Spektrums ausgeführt und eingerichtet ist. Auf die erfindungsgemäßen Vorteile des Verfahrens zur Steuerung der reihenabhängigen Bodenbearbeitungsvorrichtung darf verwiesen werden.

Die Bodenbearbeitungsvorrichtung kann mit Bearbeitungswerkzeugen ausgeführt sein, die zwischen den Reihen mit Kulturpflanzen zum Entfernen und/oder Zerkleinern von Bewuchs ausgeführt sind. Zusätzlich oder alternativ kann die Bodenbearbeitungsvorrichtung mit Bearbeitungswerkzeugen ausgeführt sein, die zum Entfernen und/oder Zerkleinern von Bewuchs innerhalb einer Reihe mit Kulturpflanzen ausgeführt sind.

Insbesondere kann einem Bildsensor der Kamera ein Dreifach-Bandpassfilter vorgeschaltet sein, welcher Wellenlängen im Blau-Spektrum herausfiltert. Dieser Dreifach-Bandpassfilter filtert den Blau-Kanal heraus, lässt aber neben dem Rot-Kanal und dem Grün-Kanal den NIR-Kanal durch, sodass die Spektren Rot, Grün und NIR vom Bildsensor der Kamera erfasst werden. Ein wesentlicher Vorteil der Verwendung des Dreifach-Bandpassfilters besteht darin, dass eine RGB-Kamera als optische Detektionseinrichtung zum Einsatz kommen kann, welche kostengünstiger ist. Insbesondere für eine Bodenbearbeitungsvorrichtung, die in der Regel mehr als eine Reihe gleichzeitig bearbeitet, bedeutet dies einen Kostenvorteil, da bevorzugt jeder Reihe eine optische Detektionseinrichtung zugeordnet ist, um die Bewegungsabläufe der Bearbeitungswerkzeuge insbesondere individuell, d.h. reihenspezifisch, ansteuern zu können. Eine derartig ausgeführte optische Detektionseinrichtung kann insbesondere zur effizienteren Unterscheidung von Kulturpflanzen die der Familie von Zwiebelgewächsen angehören und einigen Kohlarten, bspw. Blumenkohl, welche aufgrund der Dicke einer sie umgebenden äußeren Wachsschicht eine geringe Reflexion im Grün-Spektrum aufweisen, vom Boden eingesetzt werden.

Hierzu kann der Dreifach-Bandpassfilter die eintreffenden Wellenlängen filtern, wobei bevorzugt nur Wellenlängen in Bereichen zwischen 500 nm und 550 nm, zwischen 600 nm und 660 nm sowie zwischen 800 nm und 850 nm den Dreifach-Bandpassfilter passieren. In diesen Wellenlängenbereichen ist die Quantenausbeute für die drei zu detektierenden Spektren am geeignetsten.

Bevorzugt kann die zumindest eine Kamera als RGB-Kamera ausgeführt sein. Insbesondere die Ausführung als RGB-Kamera mit dem vorgeschalteten Dreifach-Bandpassfilter ermöglicht eine kostengünstige und zugleich präzisere Detektion bzw. Unterscheidung zwischen Boden, Bewuchs und Kulturpflanze.

Insbesondere kann die Steuerungsvorrichtung zur Durchführung des Verfahrens nach einem der Ansprüche 1 bis 10 eingerichtet sein. Hierzu kann die Steuerungsvorrichtung eine Speichereinheit und eine Recheneinheit umfassen, welche zur Ausführung von in der Speichereinheit hinterlegten oder hinterlegbaren Algorithmen zur Bildauswertung ausgeführt und eingerichtet ist.

Gemäß einem weiteren Aspekt wird die Verwendung einer Bodenbearbeitungsvorrichtung nach einem der Ansprüche 11 bis 14, welche zur Durchführung eines Verfahrens nach einem der Ansprüche 1 bis 10 ausgeführt und eingerichtet ist, wobei die zu erkennenden Kulturpflanzen einen erhöhten Blauanteil oder eine für Wellenlängen im Grün-Spektrum weitgehend undurchlässige Wachsschicht aufweisen und/oder der Familie der Zwiebelgewächse angehören, beansprucht.

Die vorliegende Erfindung wird nachstehend anhand eines in den Zeichnungen dargestellten Ausführungsbeispieles näher erläutert.
- Fig. 1: schematisch und exemplarisch eine Frontansicht einer Bodenbearbeitungsvorrichtung in vereinfachter Darstellung;
- Fig. 2: schematisch und exemplarisch eine Draufsicht auf die Bodenbearbeitungsvorrichtung gemäß Fig. 1;
- Fig. 3: schematisch und exemplarisch eine perspektivische Ansicht einer Werkzeugträgereinheit einer Bodenbearbeitungsvorrichtung gemäß einer Ausführungsform;
- Fig. 4: schematisch und exemplarisch eine als RGB-Kamera ausgeführte optische Detektionseinrichtung;
- Fig. 5: auf der linken Seite exemplarisch ein Bild eines Bodenabschnitts mittels RGB-Kamera und auf der rechten Seite exemplarisch ein Bild des Bodenabschnitts mit der RGB-Kamera und vorgeschaltetem Dreifach-Bandpassfilter;
- Fig. 6: auf der linken Seite ein Bild einer mittels des Excess-Green-Index durchgeführten Analyse des korrespondierenden Bildes gemäß Fig. 5 zur Unterscheidung zwischen Boden und darauf befindlichen Pflanzen und auf der rechten Seite ein Bild einer mittels des Triangular Vegetation-Index durchgeführten Analyse des korrespondierenden Bildes gemäß Fig. 5 zur Unterscheidung zwischen Boden und den darauf befindlichen Pflanzen;
- Fig. 7: auf der linken Seite ein Binärbild einer durch eine Binarisierungsmethode durchgeführten Analyse des korrespondierenden Bildes auf der linken Seite gemäß Fig. 6 und auf der rechten Seite ein Binärbild einer durch die Binarisierungsmethode durchgeführten Analyse des korrespondierenden Bildes auf der rechten Seite gemäß Fig. 6, jeweils zur Unterscheidung zwischen dem Boden und darauf den befindlichen Pflanzen; und
- Fig. 8: auf der linken Seite ein Binärbild gemäß Fig. 7 und auf der rechen Seite ein Binärbild gemäß Fig. 7, jeweils nach einer Größenauswertung zur Unterscheidung zwischen Bewuchs und Kulturpflanze.

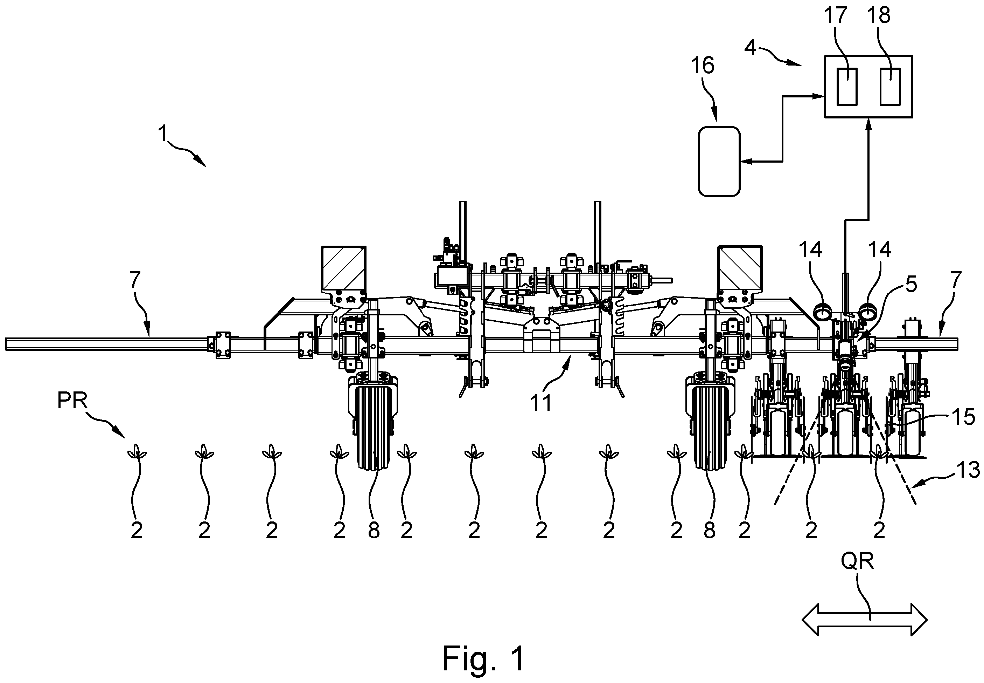

In Fig. 1 ist schematisch und exemplarisch eine vereinfachte Frontansicht einer Bodenbearbeitungsvorrichtung 1 zum Entfernen und/oder Zerkleinern von Bewuchs zwischen in einer Reihe PR angepflanzten Kulturpflanzen 2 dargestellt. Bei der Bodenbearbeitungsvorrichtung 1 handelt es sich insbesondere um eine Hackmaschine, die zur mechanischen Bekämpfung von Bewuchs zwischen in Reihen PR angepflanzten Kulturpflanzen 2 eingesetzt wird. An sich in Querrichtung QR erstreckenden Rahmenelementen 7 sind Werkzeugträgereinheiten 6 im Wesentlichen äquidistant angeordnet. Die Rahmenelemente 7 sind an einem zu diesen parallel verlaufenden, mehrteiligen Profilrahmen 9 angeordnet. Der Profilrahmen 9 kann klappbar ausgeführt sein. In der Darstellung sind aus Vereinfachungsgründen lediglich drei Werkzeugträgereinheiten 6 exemplarisch dargestellt.

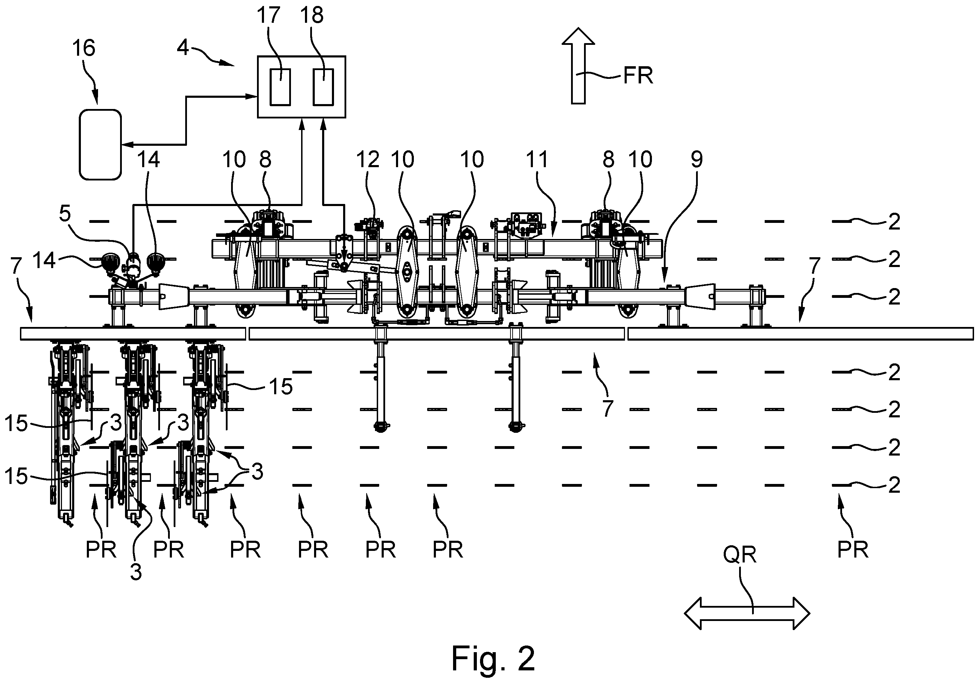

Die Darstellung in Fig. 2 zeigt schematisch und exemplarisch eine Draufsicht auf die Bodenbearbeitungsvorrichtung 1 gemäß Fig. 1. Der Profilrahmen 9 ist durch Parallelogrammelemente 10 mit einem Grundrahmen 11 verbunden. Ein Aktuator 12, hier und vorzugsweise ein Linearaktuator, ermöglicht durch eine Verschiebung eines der Parallelogrammelemente 10 eine laterale Bewegung des Profilrahmens 9 relativ zum Grundrahmen 11. Mit dem Profilrahmen 9 werden die an den Rahmenelementen 7 angeordneten Werkzeugträgereinheiten 6 lateral bewegt. An dem Grundrahmen 11 sind Räder 8 angeordnet.

Die Bodenbearbeitungsvorrichtung 1 umfasst in Querrichtung QR zu der Reihe angeordnete Bearbeitungswerkzeuge 3 sowie eine der Bodenbearbeitungsvorrichtung 1 zugeordnete Steuerungsvorrichtung 4. Die Steuerungsvorrichtung 4 ist dazu ausgeführt und eingerichtet, von zumindest einer an der Bodenbearbeitungsvorrichtung 1 angeordneten optischen Detektionseinrichtung 5 erfasste Bilddaten hinsichtlich der Kulturpflanzen 2 und/oder des Bewuchses auszuwerten und in Abhängigkeit von der Auswertung der Bilddaten die, insbesondere laterale, Position der Bearbeitungswerkzeuge 3 zur Entfernung des Bewuchses relativ zu den Reihen PR anzusteuern. Durch die laterale Bewegung des Profilrahmens 9 relativ zum Grundrahmen 11 ist eine Anpassung der Position von Bearbeitungswerkzeugen 3 relativ zu den Reihen PR mit Kulturpflanzen 2 möglich.

Der zumindest einen optischen Detektionseinrichtung 5 sind Leuchtmittel 14 zugeordnet. Die Leuchtmittel 14 können insbesondere als LED-Strahler ausgeführt sein. Die optische Detektionseinrichtung 5 weist einen Erfassungsbereich 13 auf, welcher in Fahrtrichtung FR weist. Hierdurch ist eine vorausschauende Erfassung der in einer Reihe PR angeordneten Kulturpflanzen 2 möglich.

Im dargestellten Ausführungsbeispiel ist die zumindest eine optische Detektionseinrichtung 5 im äußeren Randbereich der Bodenbearbeitungsvorrichtung 1 angeordnet. Eine weitere optische Detektionseinrichtung 5 kann auf der gegenüberliegenden Seite der Bodenbearbeitungsvorrichtung 1 angeordnet sein. Dadurch lässt sich die Genauigkeit der Ansteuerung der lateralen Bewegung des Profilrahmens 9 relativ zum Grundrahmen 11 verbessern.

Dem jeweiligen Bearbeitungswerkzeug 3 ist jeweils zumindest ein Schutzelement 15 zugeordnet. Das Schutzelement 12 ist im Wesentlichen parallel zur Reihe PR orientiert ist. Durch das Schutzelement 15 kann dem Aufwerfen von Erdreich auf die Kulturpflanzen 2 durch das Bearbeitungswerkzeug 3 vorgebeugt werden.

Die Bearbeitungswerkzeuge 3 der Bodenbearbeitungsvorrichtung 1 können unterschiedlich ausgeführt sein. Bei dem in den Fig. 1 und Fig. 2 dargestellten Bodenbearbeitungsvorrichtung 1, welche zur mechanischen Bekämpfung von Bewuchs zwischen den in Reihen PR angepflanzten Kulturpflanzen 2 eingesetzt wird, sind die Bearbeitungswerkzeuge 3 ortsfest an der Werkzeugträgereinheit 6 befestigt. Die Bearbeitungswerkzeuge 3 können beispielsweise als Hackmesser, Winkelmesser oder Gänsefußschar ausgeführt sein. Es sind auch kombinierte Anordnungen von Hackmesser und Winkelmesser an der Werkzeugträgereinheit 6 denkbar.

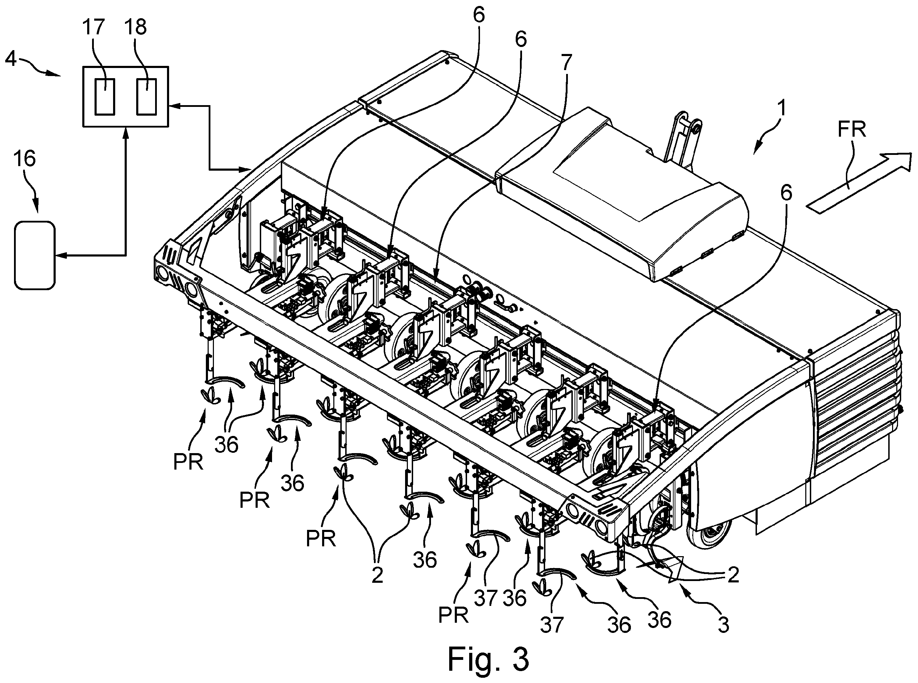

Eine alternative Ausführungsform der Bodenbearbeitungsvorrichtung 1 ist in Fig. 3 dargestellt. In Fig. 3 ist schematisch und exemplarisch eine reihenabhängig arbeitende Bodenbearbeitungsvorrichtung 1 dargestellt, die zusätzlich zum Entfernen und/oder Zerkleinern von Bewuchs zwischen in den Reihe PR angepflanzten Kulturpflanzen 2 eingerichtet ist.

Die Bodenbearbeitungsvorrichtung 1 umfasst in Querrichtung QR zu der Reihe PR angeordnete Bearbeitungswerkzeuge 3 sowie in Querrichtung zu der Reihe PR oszillierend bewegte Bearbeitungswerkzeuge 36. Die Werkzeugträgereinheiten 6 sind durch eine Aktuatorik seitlich, d.h. quer zur Fahrtrichtung FR, verstellbar. Hierzu können die Werkzeugträgereinheiten 6 an einem sich quer zur Fahrrichtung FR erstreckenden Rahmenelement 7 der Bodenbearbeitungsvorrichtung 1 angeordnet sein. Das Rahmenelement 7 der Bodenbearbeitungsvorrichtung 1 kann durch zumindest einen - in Fig. 3 nicht sichtbar dargestellten - Aktuator 12, hier und vorzugsweise zwei Linearaktoren, seitlich verschiebbar ausgeführt sein.

An den Werkzeugträgereinheiten 6 sind die weiter oben bereits beschriebenen Bearbeitungswerkzeuge 3 vorgesehen, welche zum Entfernen und/oder Zerkleinern von Bewuchs zwischen den Reihen PR mit Kulturpflanzen 2 zum Einsatz kommen. Zusätzlich sind oszillierend angetriebene Bearbeitungswerkzeuge 36 vorgesehen, welche innerhalb der jeweiligen Reihe PR auftretenden Bewuchs entfernen und/oder zerkleinern.

Die Steuerungsvorrichtung 4 ist dazu ausgeführt und eingerichtet, von der zumindest einen an der Bodenbearbeitungsvorrichtung 1 angeordneten optischen Detektionseinrichtung 5 erfasste Bilddaten hinsichtlich der Kulturpflanzen 2 und/oder des Bewuchses auszuwerten und in Abhängigkeit von der Auswertung der Bilddaten zusätzlich zur lateralen Position der Bearbeitungswerkzeuge 3 und 36 die Bewegungsabläufe der Bearbeitungswerkzeuge 36 zur Entfernung des Bewuchses anzusteuern.

In Fahrrichtung FR gesehen hinter den Bearbeitungswerkzeugen 3 sind die oszillierend bewegten Bearbeitungswerkzeuge 36 beidseitig an einem Längsträger der Werkzeugträgereinheiten 6 angeordnet. Die Bearbeitungswerkzeuge 36 weisen jeweils ein um eine senkrecht zum Boden verlaufende Schwenkachse durch einen Antrieb zyklisch schwenkbares Messer 37 auf.

Jedem der Bearbeitungswerkzeuge 36 ist ein Antrieb zugeordnet, wobei die Antriebe unabhängig voneinander durch die Steuerungsvorrichtung 4 ansteuerbar sind. Die Antriebe sind hier und vorzugsweise als doppeltwirkende hydraulisch oder pneumatisch betätigbare Zylinder ausgeführt.

Das jeweilige Messer 37 weist eine im Wesentlichen bogenförmige oder sichelförmige Kontur auf. In Längsrichtung respektive Fahrtrichtung FR gesehen sind die Messer 37 beabstandet hintereinander angeordnet. Hierdurch wird vermieden, dass es beim Ausführen der oszillierenden Schwenkbewegung der Bearbeitungswerkzeuge 36 zu Kollisionen kommt.

Zur Ansteuerung der doppeltwirkenden hydraulisch oder pneumatisch betätigbaren Zylinder, welche die Bearbeitungswerkzeuge 36 oszillierend antreiben, ist jedem Zylinder ein Ventilblock zugeordnet, welcher durch die Steuerungsvorrichtung 4 angesteuert wird. Die von dem jeweiligen Zylinder erzeugte translatorische Bewegung wird durch eine zwischengeschaltete Kinematik, welche den Zylinder mit der Schwenkachse des Bearbeitungswerkzeugs 36 verbindet in eine rotatorische Bewegung der Schwenkachse transformiert. Der jeweilige Schwenkwinkel, mit welchem das jeweilige Bearbeitungswerkzeug 36 verschwenkt wird, ist unabhängig voneinander einstellbar und lässt sich im laufenden Betrieb der Bodenbearbeitungsvorrichtung 1 verändern.

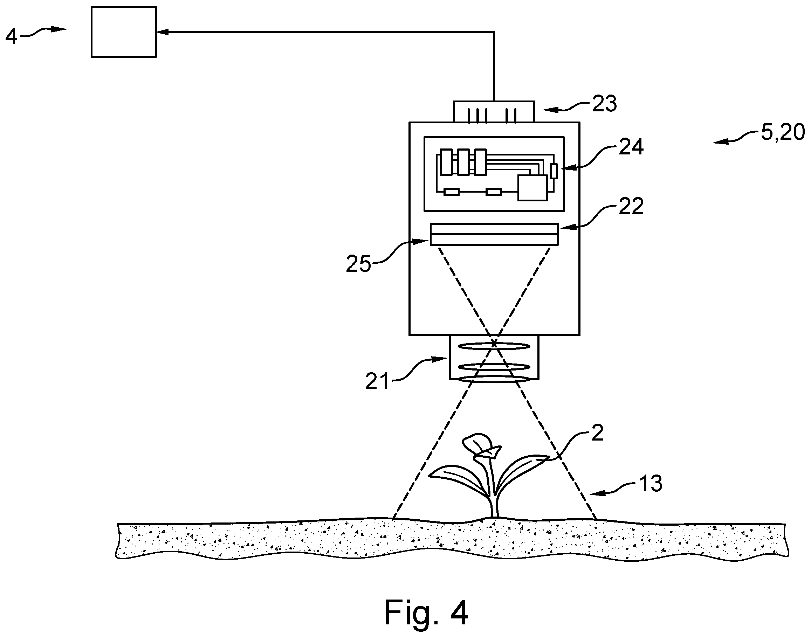

In Fig. 4 ist schematisch und exemplarisch eine vereinfachte Darstellung einer als RGB-Kamera 20 ausgeführten optischen Detektionseinrichtung 5 gezeigt. Die RGB-Kamera 20 umfasst ein Objektiv 21, einen Bildsensor 22 sowie eine Schnittstelle 23 zur Datenübertragung an die Steuerungsvorrichtung 4. Die RGB-Kamera 20 kann optional mit einer Verarbeitungselektronik 24 ausgeführt sein, welche der Bildverarbeitung dienen kann.

Dem Bildsensor 22 der RGB-Kamera 20 ist ein Dreifach-Bandpassfilter 25 vorgeschaltet. Der Dreifach-Bandpassfilter 25 ist dazu ausgeführt und eingerichtet, um Wellenlängen im Blau-Spektrum herauszufiltern. Dieser Dreifach-Bandpassfilter 25 filtert den Blau-Kanal heraus, lässt aber neben dem Rot-Kanal und dem Grün-Kanal den NIR-Kanal durch, sodass die Spektren Rot, Grün und NIR von dem Bildsensor 22 der RGB-Kamera 20 erfasst werden. Hierzu kann der Dreifach-Bandpassfilter 25 die eintreffenden Wellenlängen filtern, wobei bevorzugt nur Wellenlängen in Bereichen zwischen 500 nm und 550 nm, zwischen 600 nm und 660 nm sowie zwischen 800 nm und 850 nm den Dreifach-Bandpassfilter 25 passieren.

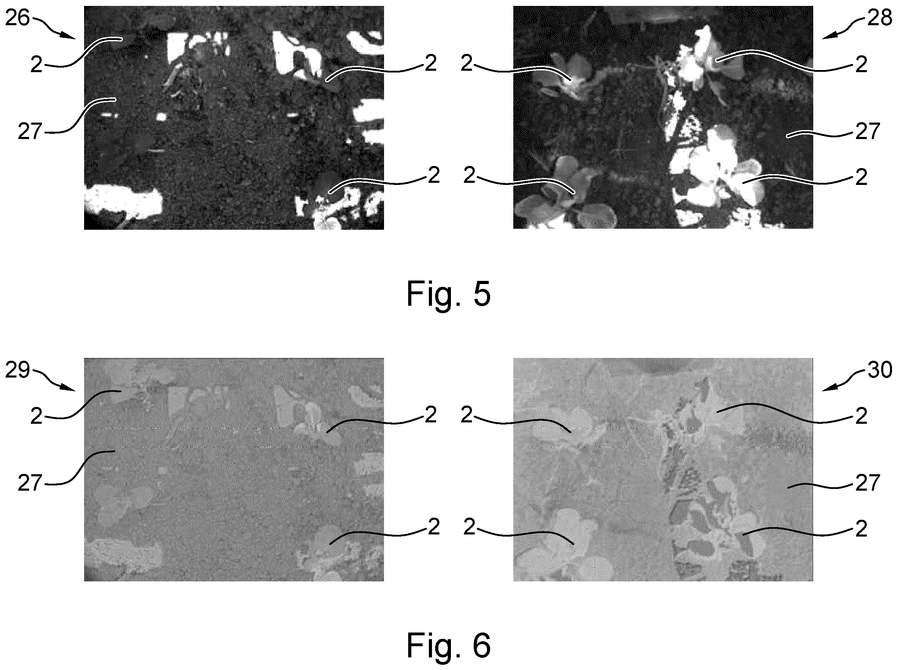

Die Steuerungsvorrichtung 4 umfasst ein Bildverarbeitungssystem, welches der Umwandlung und Auswertung der Bilddaten dient. Der Vorgang der Bilddatenauswertung durch die Steuerungsvorrichtung 4 wird nachstehend anhand der Fig. 5 bis Fig. 8 schrittweise erläutert.

In Fig. 5 ist auf der linken Seite exemplarisch ein Bild 26 eines Bodenabschnitts 27 mittels der RGB-Kamera 20 und auf der rechten Seite exemplarisch ein Bild 28 des Bodenabschnitts 27 mit der RGB-Kamera 20 mit dem Bildsensor 22 vorgeschaltetem Dreifach-Bandpassfilter 25 dargestellt. Die Bilder 26 und 28 sind eine Gegenüberstellung der Bilder von Blumenkohlpflanzen als Kulturpflanzen 2.

Die Darstellung in Fig. 6 zeigt in einer Gegenüberstellung auf der linken Seite ein Graustufenbild 29 einer mittels des Excess-Green-Index (ExG) durchgeführten Analyse des Bildes 26 gemäß Fig. 5 zur Unterscheidung zwischen Boden und darauf befindlichen Pflanzen und auf der rechten Seite ein Graustufenbild 30 einer mittels des Triangular Vegetation- Index (TVI) durchgeführten Analyse des korrespondierenden Bildes 28 gemäß Fig. 5 zur Unterscheidung zwischen Boden und den darauf befindlichen Pflanzen. Bereits diese Gegenüberstellung der analysierten Bilder 29, 30 zeigt eine signifikante Abweichung in der Qualität der Unterscheidung zwischen Boden und Pflanze, d.h. Bewuchs und Kulturpflanze 2.

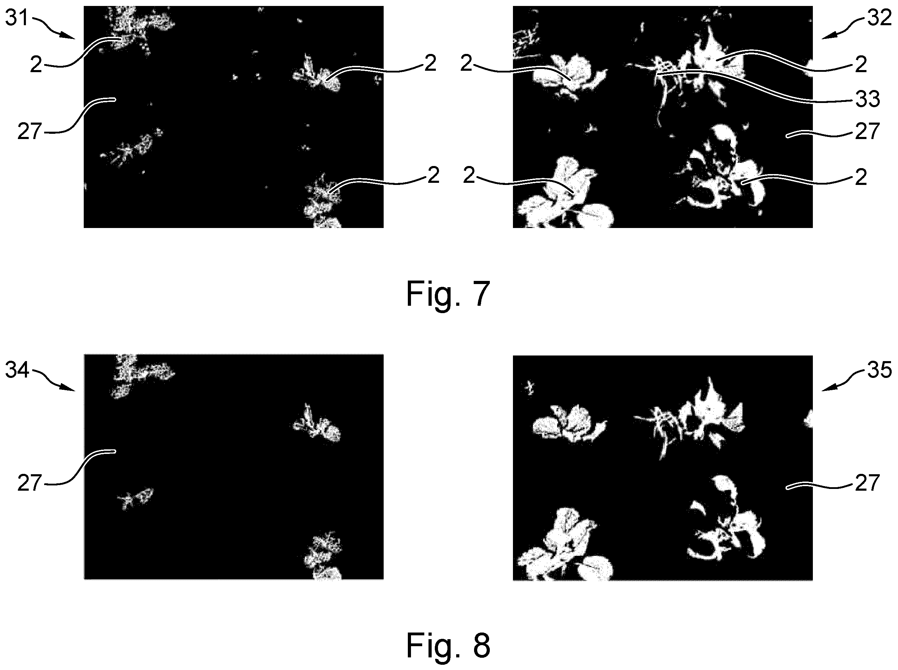

In Fig. 7 ist auf der linken Seite ein Binärbild 31 einer durch eine Binarisierungsmethode durchgeführten Analyse des korrespondierenden Graustufenbildes 29 auf der linken Seite gemäß Fig. 6 und auf der rechten Seite ein Binärbild 32 einer durch die Binarisierungsmethode durchgeführten Analyse des korrespondierenden Graustufenbildes 30 auf der rechten Seite gemäß Fig. 6, jeweils zur Unterscheidung zwischen dem Boden und darauf den befindlichen Pflanzen 2, 33 dargestellt. Mittels der Binarisierungsmethode wird das mittels des Triangular Vegetation- Index (TVI) analysierte Graustufenbild 30 in das Binärbild 32 respektive Schwarz-Weiß-Bild umgerechnet, wobei nur die als Pflanzen identifizierten Elemente auf dem Boden dargestellt werden.

Die Darstellung in Fig. 8 zeigt auf der linken Seite ein Binärbild 34, welches auf der Größenauswertung des linken Binärbildes 31 gemäß Fig. 7 basiert und auf der rechten Seite ein Binärbild 35, welches auf der Größenauswertung des rechten Binärbildes 32 gemäß Fig. 7 basiert. Hierzu kann ein Bediener eine Größenvorgabe für die Kulturpflanze 2 mittels einer Eingabe-Ausgabe-Einheit 16 vornehmen, welche als Vergleichsmaßstab für die Differenzierung zwischen dem zu entfernenden und/oder zu zerkleinernden Bewuchs 33 und den Kulturpflanzen 2 verwendet wird, die in dem aus der rechten Seite dargestellten Binärbild 32 durch die Bildauswertung kenntlich gemacht sind. Denkbar ist auch eine Auswahl aus einem in einer Speichereinheit 17 der Steuerungsvorrichtung 4 hinterlegten oder hinterlegbaren Datenbestand für verschiedenen Kulturpflanzen 2.

Bereits die Gegenüberstellung der beiden Binärbilder 31 und 32 in Fig. 7 verdeutlicht den qualitativen Unterschied bei der Differenzierung zwischen dem Boden und dem darauf befindlichen Bewuchs 33 und den Kulturpflanzen 2.

Wesentlich ist, dass durch die Verwendung der RGB-Kamera 20 mit vorgeschaltetem Dreifach-Bandpassfilter 25 als zumindest eine Detektionseinrichtung 5, durch welche Bilddaten im Rot-Grün-Nahinfrarot-Spektrum (RG-NIR-Spektrum) unter Ausschluss des Blau-Spektrums erfasst werden, die Unterscheidung von Kulturpflanzen, welche einen bläulichen Farbton aufweisen, und Boden gegenüber der klassischen Erfassung mittels RGB-Kamera und anschließender Bilddatenauswertung mittels des Excess-Green Index eine signifikante Verbesserung erreicht wird. Beispielhaft für Kulturpflanzen mit einem bläulichen Farbton sind Zwiebeln, Lauch oder einige Kohlarten zu nennen. Blumenkohl und andere Kohlsorten weisen eine dickere Wachsschicht als andere Kulturpflanzen wie beispielsweise Mais oder Zuckerrüben. Infolgedessen ist die Reflexion im Grün-Spektrum in der Regel schwächer, so dass die Erkennung solcher Kulturpflanzen anhand von Bilddaten, welche die Kulturpflanze im RG-NIR-Spektrum darstellt, deutlich verbessert.

Die Binarisierung der in Fig. 6 im Graustufenbild 30 enthaltenen Bilddaten erfolgt mittels eines Schwellenwertverfahrens. Mittels der Binarisierung wird aus einem in einem Zwischenschritt zum Graustufenbild 30 umgewandelten Farbbild das Binärbild 32 erzeugt. Das Binärbild 32 wird verwendet, um durch Auswertung zwischen Bewuchs 33 und Kulturpflanze 2 zu unterscheiden. Hierzu kann ein Bediener eine Größenvorgabe für die Kulturpflanze 2 mittels der Eingabe-Ausgabe-Einheit 16 vornehmen, welche als Vergleichsmaßstab für die Differenzierung zwischen dem Bewuchs 33 und Kulturpflanze 2 verwendet wird.

In der Speichereinheit 17 der Steuerungsvorrichtung 4 kann ein geeigneter Algorithmus zur Binarisierung hinterlegt oder hinterlegbar sein, welcher von einer Recheneinheit 18 der Steuerungsvorrichtung 4 ausführbar ist oder ausgeführt wird. Beispielhaft für ein Schwellenwertverfahren wird das Verfahren von Otsu genannt.

Am Profilrahmen 9 und/oder an zumindest einem der Parallelogrammelemente 10 ist ein Winkelsensor angeordnet, aus dessen Messsignalen sich die aktuelle Position, d.h. die seitliche Verschiebung des Profilrahmens 9 gegenüber dem Grundrahmen 11, bestimmen lässt.

Insbesondere können vom Schwellenwertverfahren verwendete Schwellenwerte durch die Steuerungsvorrichtung 4 automatisch vorgegeben und/oder manuell durch einen Bediener der Bodenbearbeitungsvorrichtung 1 eingestellt oder angepasst werden. Während eine automatische Vorgabe von Schwellenwerten für das Schwellenwertverfahren eine Vereinfachung bzw. Entlastung des Bedieners darstellt, bietet die manuelle Vorgabe oder Anpassung durch den Bediener die Möglichkeit, die verwendeten Schwellenwerte des Schwellenwertverfahrens an bestehende Umgebungsbedingungen während des Bearbeitungsvorganges auf dem Feld anzupassen bzw. diese zu berücksichtigen.

Die Steuerungsvorrichtung 4 passt in Abhängigkeit von der Auswertung der Bilddaten die laterale Position des mehrere Bearbeitungswerkzeuge 3, 36 tragenden, quer zur Reihe der angepflanzten Kulturpflanzen 2 orientierten Rahmenelementes 7 an. Hierzu steuert die Steuerungsvorrichtung 4 den zumindest einen Aktuator 12 an, um das Rahmenelement 7 lateral zu bewegen.

Darüber hinaus kann die Steuerungsvorrichtung 4 in Abhängigkeit von der Auswertung der Bilddaten die laterale Position von paarweise einer Reihe mit Kulturpflanzen 2 zugeordneten Bearbeitungswerkzeugen 36 anpassen. Hierzu steuert die Steuerungsvorrichtung 4 die Antriebe der Bearbeitungswerkzeuge 36, insbesondere unabhängig voneinander an.

Gemäß einem weiteren Aspekt können in Abhängigkeit von der Auswertung der Bilddaten die Bewegungsabläufe eines Bearbeitungswerkzeugs 36 eines Paares von Bearbeitungswerkzeugen 36 unabhängig von dem anderen Bearbeitungswerkzeugs 36 verändert werden.

**Bezugszeichenliste**

| | | | |
|---|---|---|---|
| 1 | Bodenbearbeitungsvorrichtung | 34 | Binärbild |
| 2 | Kulturpflanze | 35 | Binärbild |
| 3 | Bearbeitungswerkzeug | 36 | Bearbeitungswerkzeug |
| 4 | Steuerungsvorrichtung | 37 | Messer |
| 5 | Detektionseinrichtung | | |
| 6 | Werkzeugträgereinheit | | |
| 7 | Rahmenelement | FR | Fahrtrichtung |
| 8 | Rad | PR | Reihe |
| 9 | Profilrahmen | QR | Querrichtung |
| 10 | Parallelogrammelement | | |
| 11 | Grundrahmen | | |
| 12 | Aktuator | | |
| 13 | Erfassungsbereich | | |
| 14 | Leuchtmittel | | |
| 15 | Schutzelement | | |
| 16 | Eingabe-Ausgabe-Einheit | | |
| 17 | Speichereinheit | | |
| 18 | Recheneinheit | | |
| 19 | | | |
| 20 | RGB-Kamera | | |
| 21 | Objektiv | | |
| 22 | Bildsensor | | |
| 23 | Schnittstelle | | |
| 24 | Verarbeitungselektronik | | |
| 25 | Dreifach-Bandpassfilter | | |
| 26 | Bild | | |
| 27 | Bodenabschnitt | | |
| 28 | Bild | | |
| 29 | Graustufenbild | | |
| 30 | Graustufenbild | | |
| 31 | Binärbild | | |
| 32 | Binärbild | | |
| 33 | Bewuchs | | |

## Patentansprüche

1. Verfahren zur Steuerung einer Bodenbearbeitungsvorrichtung (1) zum Entfernen und/oder Zerkleinern von Bewuchs (33) zwischen in Reihen angepflanzten Kulturpflanzen (2) mittels in Querrichtung (QR) zu den Reihen in einem Reihenabstand an einem Rahmenelement (7) angeordneten Bearbeitungswerkzeugen (3, 36), wobei Bilddaten vom Boden, den Kulturpflanzen (2) und/oder des Bewuchses (33) mittels zumindest einer optischen Detektionseinrichtung (5) erfasst und die Bilddaten durch eine der Bodenbearbeitungsvorrichtung (1) zugeordneten Steuerungsvorrichtung (4) ausgewertet werden, durch welche die Position der Bearbeitungswerkzeuge (3, 36) zur Entfernung und/oder Zerkleinerung des Bewuchses (33) relativ zu zumindest einer der Reihen (PR) in Abhängigkeit von der Auswertung angesteuert wird, **dadurch gekennzeichnet, dass** als zumindest eine Detektionseinrichtung (5) eine Kamera (20) verwendet wird, durch welche Bilddaten im Rot-Grün-Nahinfrarot-Spektrum (RG-NIR-Spektrum) unter Ausschluss des Blau-Spektrums erfasst werden.

2. Verfahren nach Anspruch 1, **dadurch gekennzeichnet, dass** einem Bildsensor (22) der Kamera (20) ein Dreifach-Bandpassfilter (25) vorgeschaltet wird, durch welchen Wellenlängen im Blau-Spektrum herausgefiltert werden.

3. Verfahren nach Anspruch 1 oder 2, **dadurch gekennzeichnet, dass** zur Unterscheidung zwischen Boden und Kulturpflanzen (2) und/oder Bewuchs (33) ein hyperspektraler Vegetationsindex, insbesondere der Triangular Vegetations-Index (TVI), verwendet wird.

4. Verfahren nach einem der Ansprüche 1 bis 3, **dadurch gekennzeichnet, dass** mittels eines Schwellenwertverfahrens eine Binarisierung der erfassten Bilddaten durchgeführt wird.

5. Verfahren nach Anspruch 4, **dadurch gekennzeichnet, dass** vom Schwellenwertverfahren verwendete Schwellenwerte durch die Steuerungsvorrichtung (4) automatisch vorgegeben und/oder manuell durch einen Bediener der Bodenbearbeitungsvorrichtung (1) eingestellt und/oder angepasst werden.

6. Verfahren nach Anspruch 4 oder 5, **dadurch gekennzeichnet, dass** die vom Schwellenwertverfahren verwendeten Schwellenwerte in Abhängigkeit von der Art der angepflanzten Kulturpflanzen (2) durch die Steuerungsvorrichtung (4) bestimmt und/oder manuell durch einen Bediener der Bodenbearbeitungsvorrichtung (1) eingestellt werden.

7. Verfahren nach einem der Ansprüche 1 bis 6, **dadurch gekennzeichnet, dass** in Abhängigkeit von der Auswertung der Bilddaten die laterale Position des mehrere Bearbeitungswerkzeuge (3) tragenden, quer zu den Reihen (PR) der angepflanzten Kulturpflanzen (2) orientierten Rahmenelementes (7) durch die Steuerungsvorrichtung (4) angepasst wird.

8. Verfahren nach einem der Ansprüche 1 bis 7, **dadurch gekennzeichnet, dass** in Abhängigkeit von der Auswertung der Bilddaten die laterale Position von einer Reihe (PR) mit Kulturpflanzen (2) zugeordneten Bearbeitungswerkzeugen (3, 36) angepasst wird.

9. Verfahren nach Anspruch 8, **dadurch gekennzeichnet, dass** die laterale Anpassung von Bearbeitungswerkzeugen (36) unabhängig voneinander durchgeführt wird.

10. Verfahren nach einem der Ansprüche 1 bis 9, **dadurch gekennzeichnet, dass** in Abhängigkeit von der Auswertung der Bilddaten die Bewegungsabläufe eines Bearbeitungswerkzeugs (36) eines Paares von Bearbeitungswerkzeugen (36) unabhängig von dem anderen Bearbeitungswerkzeug (36) verändert wird.

11. Bodenbearbeitungsvorrichtung (1) zum Entfernen und/oder Zerkleinern von Bewuchs (33) zwischen in Reihen angepflanzten Kulturpflanzen (2), umfassend in Querrichtung (QR) zu den Reihen in einem Reihenabstand an einem Rahmenelement (7) angeordnete Bearbeitungswerkzeuge (3, 36) sowie eine der Bodenbearbeitungsvorrichtung (3) zugeordnete Steuerungsvorrichtung (4), die dazu ausgeführt und eingerichtet ist, von zumindest einer an der Bodenbearbeitungsvorrichtung (1) angeordneten optischen Detektionseinrichtung (5) erfasste Bilddaten vom Boden, den Kulturpflanzen (2) und/oder des Bewuchses (33) auszuwerten und in Abhängigkeit von der Auswertung der Bilddaten die Position der Bearbeitungswerkzeuge (3, 36) zur Entfernung des Bewuchses (33) relativ zu zumindest einer der Reihen (PR) anzusteuern, **dadurch gekennzeichnet, dass** die zumindest eine Detektionseinrichtung (5) als eine Kamera (20) ausgebildet ist, welche zur Erfassung von Bilddaten im Rot-Grün-Nahinfrarot-Spektrum (RG-NIR-Spektrum) unter Ausschluss des Blau-Spektrums ausgeführt und eingerichtet ist.

12. Bodenbearbeitungsvorrichtung (1) nach Anspruch 11, **dadurch gekennzeichnet, dass** einem Bildsensor (22) der Kamera (20) ein Dreifach-Bandpassfilter (25) vorgeschaltet ist, welcher Wellenlängen im Blau-Spektrum herausfiltert.

13. Bodenbearbeitungsvorrichtung (1) nach Anspruch 11 oder 12, **dadurch gekennzeichnet, dass** die zumindest eine Kamera (20) als RGB-Kamera ausgeführt ist.

14. Bodenbearbeitungsvorrichtung (1) nach einem der Ansprüche 11 bis 13, **dadurch gekennzeichnet, dass** die Steuerungsvorrichtung (4) zur Durchführung des Verfahrens nach einem der Ansprüche 1 bis 10 eingerichtet ist.

15. Verwendung einer Bodenbearbeitungsvorrichtung (1) nach einem der Ansprüche 11 bis 14, welche zur Durchführung eines Verfahrens nach einem der Ansprüche 1 bis 10 ausgeführt und eingerichtet ist, **dadurch gekennzeichnet, dass** die zu erkennenden Kulturpflanzen (2) einen erhöhten Blauanteil oder eine für Wellenlängen im Grün-Spektrum weitgehend undurchlässige Wachsschicht aufweisen und/oder der Familie der Zwiebelgewächse angehören.

## Claims

1. A method for controlling a soil cultivation device (1) for removing and/or chopping vegetation (33) between crop plants (2) planted in rows by means of processing tools (3, 36) arranged, at a row distance in a transverse direction (QR) to the rows, on a frame element (7), wherein image data of the ground, the crop plants (2) and of the vegetation (33) are detected by means of an optical detection device (5) and the image data are evaluated by a control device (4) assigned to the soil cultivation device (1), through which the position of the processing tools (3, 36) for removing and/or chopping the vegetation (33) is controlled relative to at least one of the rows (PR) depending on the evaluation, **characterised in that** as at least one detection device (5) a camera (20) is used, through which image data are detected in the red-green-near infrared spectrum (RG-NIR spectrum) under the exclusion of the blue spectrum.

2. The method according to Claim 1, **characterised in that** a triple band pass filter (25) is connected upstream of an image sensor (22) of the camera (20), by way of which wavelengths in the blue spectrum are filtered out.

3. The method according to Claim 1 or 2, **characterised in that** for distinguishing between ground and crop plants (2) and/or vegetation (33), a hyper-spectral vegetation index, in particular, the triangular vegetation index (TVI) is used.

4. The method according to any one of the Claims 1 to 3, **characterised in that** binarisation of the captured image data is carried out by means of a thresholding method.

5. The method according to Claim 4, **characterised in that** threshold values used by the thresholding method are automatically set by the control device (4) and/or manually set and/or adapted by an operator of the soil cultivation device (1).

6. The method according to Claim 4 or 5, **characterised in that** the threshold values used by the thresholding method are determined by the control device (4) depending on the type of the planted crop plants (2) and/or manually set by an operator of the soil cultivation device (1).

7. The method according to any one of the Claims 1 to 6, **characterised in that** depending on the evaluation of the image data the lateral position of the frame element (7) carrying multiple processing tools (3) oriented transversely to the rows (PR) of the planted crop plants (2) is adapted by the control device (4).

8. The method according to any one of the Claims 1 to 7, **characterised in that** the lateral position of processing tools (3, 36) assigned to a row (PR) with crop plants (2) is adapted depending on the evaluation of the image data.

9. The method according to Claim 8, **characterised in that** the lateral adaptation of processing tools (36) is carried out independently of one another.

10. The method according to any one of the Claims 1 to 9, **characterised in that** depending on the evaluation of the image data, the movements of a processing tool (36) of a pair of processing tools (36) is changed independently of the other processing tool (36).

11. The soil cultivation device (1) for removing and/or chopping vegetation (33) between crop plants (2) planted in rows, including processing tools (3, 36) arranged at a row distance in the transverse direction (QR) to the rows on a frame element (7), and a control device (4) assigned to the soil cultivation device (3), which is embodied and equipped for evaluating image data of the ground, the crop plants (2) and/or the vegetation (33) detected by at least one optical detection device (5) arranged on the soil cultivation device (1) and depending on the evaluation of the image data control the position of the processing tool (3, 36) for removing the vegetation (33) relative to at least one of the rows (PR), **characterised in that** the at least one detection device (5) is designed as a camera (20), which is embodied and equipped for capturing image data in the red-green-near infrared spectrum (RG-NIR spectrum) with the exclusion of the blue spectrum.

12. The soil cultivation device (1) according to Claim 11, **characterised in that** a triple band pass filter (25) is connected upstream of an image sensor (22) of the camera (20), which filters out wavelengths in the blue spectrum.

13. The soil cultivation device (1) according to Claim 11 or 12, **characterised in that** the at least one camera (20) is embodied as RGB camera.

14. The soil cultivation device (1) according to any one of the Claims 11 to 13, **characterised in that** the control device (4) is equipped for carrying out the method according to any one of the Claims 1 to 10.

15. Use of a soil cultivation device (1) according to any one of the Claims 11 to 14, which is embodied and equipped for carrying out a method according to any one of the Claims 1 to 10, **characterised in that** the crop plants (2) to be detected have an elevated blue component or a wax layer which for wavelengths in the green spectrum is largely impermeable, and/or belong to the family of bulbous plants.

## Revendications

1. Procédé, destiné à commander un dispositif de travail du sol (1) pour retirer et/ou pour broyer une couverture végétale (33) entre des cultures (2) plantées en rangées au moyen d'outils de traitement (3, 36) placés dans la direction transversale (QR) par rapport aux rangées, avec un écart en rapport aux rangées sur un élément de bâti (7), des données images du sol, des cultures (2) et/ou de la couverture végétale (33) étant détectées au moyen d'au moins un système détecteur (5) optique et les données images étant évaluées par un dispositif de commande (4) affecté au dispositif de travail du sol (1), par lequel la position des outils de traitement (3, 36) pour le retrait et/ou le broyage de la couverture végétale (33) par rapport à au moins l'une des rangées (PR) est pilotée en fonction de l'évaluation, **caractérisé en ce qu'**en tant qu'au moins un système détecteur (5), l'on utilise une caméra (20), par laquelle les données images sont détectées dans le spectre proche infrarouge rouge-vert (spectre PIR-RV), sous exclusion du spectre des bleus.

2. Procédé selon la revendication 1, **caractérisé en ce qu'**en amont d'un capteur d'images (22) de la caméra (20) est monté un triple filtre passe-bande (25), par lequel des longueurs d'onde dans le spectre des bleus sont éliminées par filtrage.

3. Procédé selon la revendication 1 ou 2, **caractérisé en ce que** pour faire la distinction entre le sol et les cultures (2) et/ou la couverture végétale (33), l'on utilise un indice de végétation hyperspectral, notamment l'indice de végétation triangulaire (TVI) .

4. Procédé selon l'une quelconque des revendications 1 à 3, **caractérisé en ce qu'**au moyen d'une technique de seuillage, l'on procède à une binarisation des données images détectées.

5. Procédé selon la revendication 4, **caractérisé en ce que** des valeurs seuils utilisées pour la technique de seuillage sont automatiquement prédéfinies par le dispositif de commande (4) et/ou sont réglées et/ou adaptées manuellement par un opérateur du dispositif de travail du sol (1).

6. Procédé selon la revendication 4 ou 5, **caractérisé en ce que** les valeurs seuils utilisées pour la technique de seuillage sont déterminées par le dispositif de commande (4) en fonction de la nature des cultures (2) plantées et/ou sont réglées manuellement par un opérateur du dispositif de travail du sol (1).

7. Procédé selon l'une quelconque des revendications 1 à 6, **caractérisé en ce qu'**en fonction de l'évaluation des données images, la position latérale de l'élément de bâti (7) portant plusieurs outils de traitement (3), orienté à la transversale des rangées (PR) des cultures (2) plantées est adaptée par le dispositif de commande (4).

8. Procédé selon l'une quelconque des revendications 1 à 7, **caractérisé en ce que** la position latérale d'une rangée (PR) dotée d'outils de traitement (3, 36) affectés à des cultures (2) est adaptée en fonction de l'évaluation des données images.

9. Procédé selon la revendication 8, **caractérisé en ce que** l'adaptation latérale d'outils de traitement (36) est réalisée indépendamment l'une de l'autre.

10. Procédé selon l'une quelconque des revendications 1 à 9, **caractérisé en ce qu'**en fonction de l'évaluation des données images, l'on fait varier les cycles de déplacement d'un outil de traitement (36) d'une paire d'outils de traitement (36), indépendamment de l'autre outil de traitement (36).

11. Dispositif de travail du sol (1) pour retirer et/ou pour broyer une couverture végétale (33) entre des cultures (2) plantées en rangées, comprenant des outils de traitement (3, 36) placés dans la direction transversale (QR) par rapport aux rangées avec un avec un écart en rapport aux rangées sur un élément de bâti (7), ainsi qu'un dispositif de commande (4) affecté au dispositif de travail du sol (3), qui est réalisé et configuré pour évaluer des données images du sol, des cultures (2) et/ou de la couverture végétale (33) détectées par au moins un système détecteur (5) optique placé sur le dispositif de travail du sol (1) et en fonction de l'évaluation des données images, pour piloter la position des outils de traitement (3, 36) pour retirer la couverture végétale (33) par rapport à au moins l'une des rangées (PR), **caractérisé en ce que** l'au moins un système détecteur (5) est réalisé sous la forme d'une caméra (20), laquelle est réalisée et configurée pour détecter des données images dans le spectre proche infrarouge rouge-vert (spectre PIR-RV), sous exclusion du spectre des bleus.

12. Dispositif de travail du sol (1) selon la revendication 11, **caractérisé en ce qu'**en amont d'un capteur d'images (22) de la caméra (20) est monté un triple filtre passe-bande (25), lequel élimine par filtrage des longueurs d'onde dans le spectre des bleus.

13. Dispositif de travail du sol (1) selon la revendication 11 ou 12, **caractérisé en ce que** l'au moins une caméra (20) est réalisée sous la forme d'une caméra RVB.

14. Dispositif de travail du sol (1) selon l'une quelconque des revendications 11 à 13, **caractérisé en ce que** le dispositif de commande (4) est configuré pour effectuer le procédé selon l'une quelconque des revendications 1 à 10.

15. Utilisation d'un dispositif de travail du sol (1) selon l'une quelconque des revendications 11 à 14, lequel est réalisé et configuré pour effectuer un procédé selon l'une quelconque des revendications 1 à 10, **caractérisé en ce que** les cultures (2) qui doivent être identifiées comportent une part de bleu élevée ou une couche de cire largement imperméable aux longueurs d'onde dans le spectre des verts et/ou font partie de la famille des plantes à bulbes.
